# EUROPEAN PATENT APPLICATION

(11) **EP 4 797 843 A1**
(43) Date of publication of application: **26.08.2026**
(21) Application number: 24896163.3
(22) Date of filing: 30.10.2024
(51) Int. Cl.: H04W 72/21

(54) **METHOD FOR TRANSMITTING UPLINK CONTROL INFORMATION (UCI), AND COMMUNICATION APPARATUS**

(30) Priority: 30.11.2023 CN 202311634661
(71) Applicant: HUAWEI TECHNOLOGIES CO., LTD., Shenzhen, Guangdong 518129 (CN)
(72) Inventor: PANG, Xu, Shenzhen, Guangdong 518129 (CN); XU, Rui, Shenzhen, Guangdong 518129 (CN); CAO, Youlong, Shenzhen, Guangdong 518129 (CN); QIN, Yi, Shenzhen, Guangdong 518129 (CN)
(74) Representative: Maiwald GmbH
(86) International application number: PCT/CN2024/128672
(87) International publication number: WO 2025/113072

(57) **Abstract**

An uplink control information UCI transmission method and a communication apparatus are provided. The method includes: obtaining a first resource and a second resource; generating a bit sequence of UCI, where the bit sequence includes a first bit sequence and a second bit sequence, the first bit sequence corresponds to first information indicating usage of the second resource by a terminal, the second bit sequence corresponds to second information, the second information includes one or more of: HARQ feedback information or information indicating an unused transmission occasion, a priority of the first information is the same as a priority of the second information, and the first bit sequence is before the second bit sequence; when uplink data is fully carried by the first resource, sending the uplink data and the UCI by using the first resource; and when the uplink data is not fully carried by the first resource, sending the uplink data by using the first resource and a part or all of the second resource, and sending the UCI by using the first resource. This application can improve information transmission reliability.

## Description

This application claims priority to Chinese Patent Application No. 202311634661.5, filed with the China National Intellectual Property Administration on November 30, 2023 and entitled "UPLINK CONTROL INFORMATION UCI TRANSMISSION METHOD AND COMMUNICATION APPARATUS", which is incorporated herein by reference in its entirety.

### TECHNICAL FIELD

This application relates to the field of communication technologies, and in particular, to an uplink control information UCI transmission method and a communication apparatus.

### BACKGROUND

Multi-modal services are a type of services that are built on extended reality (extended reality, XR) by adding a tactile experience dimension, enabling remote touch and remote control, including remote sensing multiple modalities such as vision, hearing, tactile sensation, and kinesthesis.

A multi-level pre-scheduling technology can be applied to the multi-modal services. To be specific, a terminal does not need to obtain an uplink grant during uplink pre-scheduling, and an access network device may allocate scheduling resources to the terminal for uplink data transmission. Specifically, the access network device may allocate two types of resources: dedicated resources and shared resources to the terminal. The terminal may determine, based on a data amount, whether to use the shared resources, and may send, to the access network device, uplink control information (uplink control information, UCI) (collectively referred to hereinafter as first information throughout) indicating usage of the shared resources by the terminal, so that the access network device can more efficiently allocate scheduling resources to other terminals.

Generally, multiple types of information can be multiplexed on a physical uplink shared channel (physical uplink shared channel, PUSCH) resources. For example, the first information and hybrid automatic repeat request (hybrid automatic repeat request, HARQ) feedback information are simultaneously multiplexed on the PUSCH resources. However, how to improve information transmission reliability is an urgent problem to be resolved.

### SUMMARY

Embodiments of this application provide an uplink control information UCI transmission method and a communication apparatus. In a bit sequence of UCI in embodiments of this application, when first information and second information are simultaneously multiplexed on a PUSCH transmission resource, and a priority of the first information is the same as a priority of the second information, a bit sequence corresponding to the first information is at a relatively front location, so that information transmission reliability can be improved, thereby facilitating service transmission.

According to a first aspect, an embodiment of this application provides a communication method. The method may be performed by a terminal, may be performed by a module (for example, a processor, a chip, or a chip system) used in the terminal, or may be implemented by a logical node, a logical module, or software that can implement all or a part of functions of the terminal. The method may include: obtaining a first resource and a second resource; generating a bit sequence that is of UCI and that includes a first bit sequence and a second bit sequence, where the first bit sequence corresponds to first information indicating usage of the second resource by the terminal, the second bit sequence corresponds to second information, the second information includes one or more of: HARQ feedback information or information indicating an unused transmission occasion, a priority of the first information is the same as a priority of the second information, the first bit sequence is before the second bit sequence, and lengths of the first bit sequence and the second bit sequence are both greater than or equal to 1; and when uplink data is fully carried by the first resource, sending the uplink data and the UCI by using the first resource; and when the uplink data is not fully carried by the first resource, sending the uplink data by using the first resource and a third resource, and sending the UCI by using the first resource, where the third resource is a part or all of the second resource.

In the solution provided in this application, when the terminal generates the bit sequence of the UCI, when the priority of the first information is the same as the priority of the second information, it can be ensured that the first bit sequence corresponding to the first information is before the second bit sequence corresponding to the second information. In addition, when the first information and the second information are simultaneously multiplexed on a PUSCH transmission resource, and resources are limited, the first bit sequence can be preferentially mapped to the transmission resource. When the uplink data is fully carried by the first resource, the uplink data and the UCI are sent by using the first resource; and when the uplink data is not fully carried by the first resource, the uplink data is sent by using the first resource and a part or an entirely of the second resource, and the UCI is sent by using the first resource. Because the first information indicates the usage of the second resource by the terminal, an access network device may decode a PUSCH based on the first information. Therefore, preferentially ensuring transmission of the first information can improve information transmission reliability, to facilitate service transmission.

In a possible implementation, the method may further include: obtaining first indication information, where the first indication information indicates that the priority of the first information is the same as the priority of the second information. The possible implementation is implemented, so that the terminal may learn, based on the first indication information, that the priority of the first information is the same as the priority of the second information, and generate the bit sequence of the UCI based on the first indication information, to improve flexibility of generating the bit sequence of the UCI by the terminal.

In a possible implementation, the method may further include: performing joint channel coding on the first bit sequence and the second bit sequence in the bit sequence of the UCI to obtain a coded bit sequence of the UCI. The possible implementation is implemented, so that joint channel coding is performed on the first bit sequence and the second bit sequence, to improve security and robustness of information hiding.

In a possible implementation, the method may further include: determining, based on a quantity of bits of the first bit sequence and a quantity of cyclic redundancy check CRC (cyclic redundancy check, CRC) bits of the first bit sequence, a quantity of coded modulation symbols corresponding to the first bit sequence; and determining, based on the quantity of coded modulation symbols corresponding to the first bit sequence, a quantity of coded modulation symbols corresponding to the second bit sequence. The possible implementation is implemented, so that the priority of the first information is the same as the priority of the second information. The quantity of coded modulation symbols corresponding to the first bit sequence may be first determined, and then the quantity of coded modulation symbols corresponding to the second bit sequence may be determined based on the quantity of coded modulation symbols corresponding to the first bit sequence. In other words, when the quantity of coded modulation symbols corresponding to the second bit sequence is determined, the quantity of coded modulation symbols corresponding to the first bit sequence may be first reserved. It may also be understood as that the quantity of coded modulation symbols of the first bit sequence is preferentially determined, and then the quantity of coded modulation symbols of the second bit sequence is determined, thereby ensuring preferential mapping of the first information, improving information transmission reliability, and facilitating service transmission.

In a possible implementation, the method may further include: mapping, starting from a resource block (resource block, RB) with a smallest sequence number in the first resource, a coded modulation symbol corresponding to the first bit sequence. The possible implementation is implemented, so that because the UCI is sent by using the first resource, a coded modulation symbol corresponding to the bit sequence of the UCI may be mapped to the first resource. Therefore, the coded modulation symbol corresponding to the first bit sequence in the bit sequence of the UCI is mapped to the first resource. Because the first information corresponding to the first bit sequence indicates the usage of the second resource by the terminal, transmission of the first bit sequence by using the first resource can improve information transmission reliability, and facilitate service transmission.

In a possible implementation, the method may further include: mapping, to a physical resource reserved in the first resource for the first information and/or the second information, the coded modulation symbol corresponding to the first bit sequence. The possible implementation is implemented, so that when the quantity of bits of the first bit sequence is less than or equal to 2, a physical resource of the first bit sequence may be reserved, and a coded first bit sequence may be mapped to the reserved physical resource. Alternatively, the physical resource of the bit sequence of the first information and the second information may be reserved. In other words, the physical resource may be shared by the first bit sequence and the second bit sequence. When the second bit sequence is mapped to the reserved physical resource, and the reserved physical resource is insufficient for mapping the first bit sequence, a coded first bit sequence that is not mapped due to the insufficient resource may be mapped to the physical resource used by the second bit sequence, thereby ensuring preferential mapping of the first bit sequence, improving information transmission reliability, and facilitating service transmission.

In a possible implementation, the method may further include: mapping, starting from a 1^{st} orthogonal frequency division multiplexing (orthogonal frequency division multiplexing, OFDM) symbol after a 1^{st} demodulation reference signal (demodulation reference signal, DMRS), or starting from a 1^{st} OFDM symbol that is not for DMRS transmission, the coded modulation symbol corresponding to the first bit sequence, where the mapping includes: consecutively mapping the first bit sequence to resource elements (resource elements, REs) of an OFDM symbol or evenly mapping the first bit sequence to the REs of the OFDM symbol in a distributed manner. The possible implementation is implemented, so that when the quantity of bits of the first bit sequence is greater than 2, and the first bit sequence is independently coded in a channel 1, a coded first bit sequence may be mapped according to a rule of consecutive mapping and distributed mapping.

In a possible implementation, the method may further include: mapping, starting from a 1^{st} OFDM symbol after a 1^{st} DMRS, or starting from a 1^{st} OFDM symbol that is not for DMRS transmission, the coded modulation symbol corresponding to the first bit sequence, where the mapping includes: consecutively mapping the first bit sequence and the second bit sequence to REs of an OFDM symbol or evenly mapping the first bit sequence and the second bit sequence to the REs of the OFDM symbol in a distributed manner. The possible implementation is implemented, so that when quantities of bits of the first bit sequence and the second bit sequence are greater than 2, and joint channel coding is performed on the first bit sequence and the second bit sequence, a coded first bit sequence and a coded second bit sequence may be mapped according to a rule of consecutive mapping and distributed mapping.

According to a second aspect, an embodiment of this application provides a communication method. The method may be performed by an access network device, may be performed by a module (for example, a processor, a chip, or a chip system) used in the access network device, or may be implemented by a logical node, a logical module, or software that can implement all or a part of functions of the access network device. The method may include: obtaining a first resource and a second resource; receiving UCI from a terminal on the first resource, where a bit sequence of the UCI includes a first bit sequence and a second bit sequence, the first bit sequence corresponds to first information indicating usage of the second resource by the terminal, the second bit sequence corresponds to second information, the second information includes one or more of: HARQ feedback information or information indicating an unused transmission occasion, a priority of the first information is the same as a priority of the second information, the first bit sequence is before the second bit sequence, and lengths of the first bit sequence and the second bit sequence are both greater than or equal to 1; and receiving uplink data on the first resource based on the UCI, or receiving the uplink data on the first resource and a third resource based on the UCI, where the third resource is a part or all of the second resource.

In the solution provided in this application, in the bit sequence of the UCI received by the access network device, when the priority of the first information is the same as the priority of the second information, the first bit sequence corresponding to the first information is before the second bit sequence corresponding to the second information. When the first information and the second information is simultaneously multiplexed on a PUSCH transmission resource, because the first information indicates the usage of the second resource by the terminal, the access network device may decode a PUSCH based on the first information. Therefore, preferentially ensuring transmission of the first information can improve information transmission reliability, to facilitate service transmission.

It should be understood that the second aspect may be performed by the access network device. Specific content of the second aspect corresponds to the content of the first aspect. For corresponding features of the second aspect and beneficial effects achieved in the second aspect, refer to the descriptions of the first aspect. To avoid repetition, detailed descriptions are appropriately omitted herein.

In a possible implementation, the method may further include: sending first indication information to the terminal, where the first indication information indicates that the priority of the first information is the same as the priority of the second information.

In a possible implementation, a coded modulation symbol corresponding to the first bit sequence is mapped starting from an RB with a smallest sequence number in the first resource.

In a possible implementation, the coded modulation symbol corresponding to the first bit sequence is mapped to a physical resource reserved in the first resource for the first information and/or the second information.

According to a third aspect, this application provides a communication apparatus. The communication apparatus includes a module/unit configured to perform the method in any one of the first aspect and the possible implementations of the first aspect. The apparatus may be a terminal, or may be a module (for example, a chip, a chip system, or a processor) used in the terminal, or may be a logical node, a logical module, or software that can implement all or a part of functions of the terminal.

According to a fourth aspect, this application provides a communication apparatus. The communication apparatus includes a module/unit configured to perform the method in any one of the second aspect and the possible implementations of the second aspect. The apparatus may be an access network device, may be a module (for example, a chip, a chip system, or a processor) used in the access network device, or may be a logical node, a logical module, or software that can implement all or a part of functions of the access network device.

According to a fifth aspect, an embodiment of this application provides a communication apparatus. The apparatus may be a terminal, may be a chip, a chip system, a processor, or the like that supports the terminal in implementing the foregoing method, or may be a logical node, a logical module, or software that can implement all or a part of functions of the terminal. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects, refer to the method and the beneficial effects according to the first aspect. Repeated parts are not described again.

According to a sixth aspect, this application provides a communication apparatus. The apparatus may be an access network device, may be a chip, a chip system, a processor, or the like that supports the access network device in implementing the foregoing method, or may be a logical node, a logical module, or software that can implement all or a part of functions of the access network device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units corresponding to the functions. The unit may be software and/or hardware. For operations performed by the communication apparatus and beneficial effects, refer to the method and the beneficial effects according to the second aspect. Repeated parts are not described again.

According to a seventh aspect, this application provides a computer-readable storage medium. The computer-readable storage medium is configured to store computer-executable instructions. When the computer-executable instructions are executed, the method performed by the terminal in the method according to the first aspect is implemented; or the method performed by the access network device in the method according to the second aspect is implemented.

According to an eighth aspect, this application provides a computer program product including a computer program. When the computer program is executed, the method performed by the terminal in the method according to the first aspect is implemented; or the method performed by the access network device in the method according to the second aspect is implemented.

According to a ninth aspect, this application provides a communication system. The communication system includes a communication apparatus (for example, a terminal) configured to perform the method according to the first aspect and a communication apparatus (for example, an access network device) configured to perform the method according to the second aspect.

### BRIEF DESCRIPTION OF DRAWINGS

FIG. 1 is a diagram of an architecture of a communication system 1000 to which an embodiment of this application is applied;
FIG. 2 is a diagram of a multi-modal service according to an embodiment of this application;
FIG. 3 is a diagram of multi-level resource allocation for a plurality of terminals according to an embodiment of this application;
FIG. 4 is an interaction diagram of a UCI transmission method according to an embodiment of this application; and
FIG. 5 and FIG. 6 are diagrams of structures of possible communication apparatuses according to embodiments of this application.

### DESCRIPTION OF EMBODIMENTS

The following further describes specific embodiments of this application in detail with reference to accompanying drawings.

Terms "first", "second", and the like in the specification, claims, and accompanying drawings of this application are used to distinguish between different objects, and are not used to describe a specific sequence. In addition, terms "including", "having", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: Only A exists, only B exists, and both A and B exist. A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural.

In this application, "sending information" may be understood as that a device sends information to another device, or may be understood as that a logical module in a device sends information to another logical module. For example, that "an access network device sends information" may be understood as that the access network device sends information to another device (for example, a terminal), or may be understood as that a logical module 1 in the access network device sends information to a logical module 2 in the access network device.

In this application, "receiving information" may be understood as that a device receives information from another device, or may be understood as that a logical module in the device receives information from another logical module. For example, that "an access network device receives information" may be understood as that the access network device receives information from another device (for example, a terminal), or may be understood as that a logical module 1 in the access network device receives information from a logical module 2 in the access network device.

In this application, "sending information to... (for example, a terminal)" may be understood as that a destination end of the information is the terminal, and may include directly or indirectly sending the information to the terminal. "Receiving information from... (for example, a terminal)" or "receiving information that is from... (for example, a terminal)" may be understood as that a source end of the information is the terminal, and may include directly or indirectly receiving the information from the terminal. Necessary processing, for example, a format change, may be performed on information between a source end and a destination end for information sending, but the destination end can understand valid information from the source end. A similar expression in this application may be understood similarly. Details are not described herein.

To better understand embodiments of this application, the following first describes a system architecture in embodiments of this application.

Embodiments of this application may be applied to a wireless communication system like a long term evolution (long term evolution, LTE) system, a 5th generation mobile communication (5th generation mobile communication, 5G) system, a communication system evolved after 5G, for example, a 6th generation mobile communication (6th generation mobile communication, 6G) system, and a wireless communication system like a satellite communication system and a short-range communication system. The wireless communication system mentioned in embodiments of this application includes but is not limited to three application scenarios of the 5G/6G mobile communication system: enhanced mobile broadband (enhanced mobile broadband, eMBB), ultra-reliable low-latency communication (ultra-reliable low-latency communication, URLLC), massive machine-type communication (massive machine-type communication, mMTC), a long range (long range, LoRa) internet of things system, or an internet of vehicles system. The wireless communication system may include one or more access network devices and one or more terminal devices.

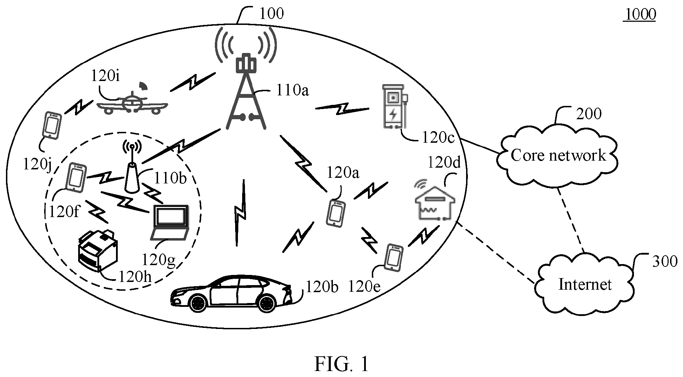

The following uses a system architecture shown in FIG. 1 as an example for description. As shown in FIG. 1, a communication system 1000 includes a radio access network (radio access network, RAN) 100 and a core network (core network, CN) 200. The RAN 100 includes at least one access network device (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the access network device 110 in a wireless manner. The access network device 110 is connected to the core network 200 in a wireless or wired manner. A core network device in the core network 200 and the access network device 110 in the RAN 100 may respectively be different physical devices, or may be a same physical device that integrates a logical function of the core network and a logical function of the radio access network.

It should be noted that the RAN 100 may be a cellular system related to the 3rd generation partnership project (3rd generation partnership project, 3GPP), for example, a 4G mobile communication system, a 5G mobile communication system, or a system evolved after 5G (for example, a 6G mobile communication system). The RAN 100 may alternatively be an open access network (open RAN, O-RAN or ORAN), a cloud radio access network (cloud radio access network, CRAN), or the like. The RAN 100 may alternatively be a communication system that integrates two or more of the foregoing systems. It should be noted that quantities of access network devices and terminal devices in FIG. 1 are merely examples, and should not be considered as any specific limitation on this application. The following describes in detail the terminal device and the network device in the system architecture.

### I. Terminal device

The terminal device may also be referred to as user equipment (user equipment, UE), a mobile station (mobile station, MS), a mobile terminal (mobile terminal, MT), or the like, is a device that is configured to provide voice or data connectivity for a user, or may be an internet of things device. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, or a pedometer), a vehicle-mounted device (for example, a vehicle, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device with a function of the terminal. For example, the terminal device may alternatively be a device that functions as the terminal in D2D communication.

A device form factor of the terminal is not limited in embodiments of this application. An apparatus configured to implement a function of the terminal device may be a terminal device; or may be an apparatus that can support the terminal device in implementing the function, for example, a chip system. The apparatus may be mounted in the terminal device or used in conjunction with the terminal device. In embodiments of this application, the chip system may include a chip, or may include a chip and another discrete device.

### 2. Access network device

The access network device is a node in a radio access network (radio access network, RAN), and may also be referred to as a network device or a RAN node (or device). The access network device is configured to help a terminal implement radio access. A plurality of access network devices 110 in the communication system 1000 may be nodes of a same type, or may be nodes of different types. In some scenarios, roles of the access network device 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The access network device 110 and the terminal 120 are both referred to as communication apparatuses sometimes. For example, the network elements 110a and 110b in FIG. 1 may be understood as communication apparatuses having a function of the base station, and the network elements 120a to 120j may be understood as communication apparatuses having a function of the terminal.

In a possible scenario, the access network device may be a base station (base station), an evolved NodeB (evolved NodeB, eNodeB), a transmission reception point (transmission reception point, TRP), a transmitting point (transmitting point, TP), a next generation NodeB (next generation NodeB, gNB), a next generation base station in a 6th generation (6th generation, 6G) mobile communication system, a base station in a future mobile communication system, a satellite, an integrated access and backhaul (integrated access and backhaul, IAB) node, or an access network device in a mobile switching center-based non-terrestrial communication network (non-terrestrial network, NTN) communication system, that is, the access network device may be deployed on a high-altitude platform, a satellite, or the like. The access network device may be a macro base station (for example, 110a in FIG. 1), a micro base station or an indoor station (for example, 110b in FIG. 1), a relay node or a donor node, or a radio controller in a CRAN scenario. The access network device may alternatively be a device that functions as a base station in device to device (device to device, D2D) communication, internet of vehicles communication, uncrewed aerial vehicle communication, or machine communication. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU).

All or the part of functions of the access network device in this application may alternatively be implemented by using a software function running on hardware, or may be implemented by using a virtualization function instantiated on a platform (for example, a cloud platform). The access network device in this application may alternatively be a logical node, a logical module, or software that can implement all or the part of the functions of the access network device.

In another possible scenario, a plurality of access network devices coordinate to assist the terminal in implementing radio access, and different access network devices separately implement a part of functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including the CU node and the DU node. In addition, the CU may be classified as an access network device in an access network RAN, or the CU may be classified as an access network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of the software module and the hardware module.

A form factor of the access network device is not limited in embodiments of this application. An apparatus configured to implement a function of the access network device may be an access network device, or may be an apparatus that can support the access network device in implementing the function, for example, a chip system. The apparatus may be mounted in the access network device or used in conjunction with the access network device.

To facilitate understanding of content of the solutions, the following further explains and describes some terms in embodiments of this application, to facilitate understanding by a person skilled in the art. This part is merely for ease of understanding, and cannot be considered as any specific limitation on this application.

### 1. Extended reality (extended reality, XR)

The XR means that reality and virtuality are combined through computers to create a virtual environment in which human-machine interaction can be performed. The XR usually includes virtual reality (virtual reality, VR) and augmented reality (augmented reality, AR). An XR service is usually featured as follows. ①. Transmission of a service model (also referred to as a domain model (domain model)) is usually periodically performed based on a frame rate, where the service model indicates how associated data in service logic is associated and coordinated. ②. A data amount for transmission is large, and a frame data amount is variable.

### 2. Multi-modal service

The multi-modal service is a service for which a tactile experience dimension is added on the basis of XR, and can implement remote touch and remote control, including remote sensing in a plurality of aspects such as vision, hearing, tactile sensation, and kinesthesis. The multi-modal service has great development space in industrial automation, healthcare, distance education, and other related fields, can provide a user with comprehensive interactive experience, and has a great application value and business potential.

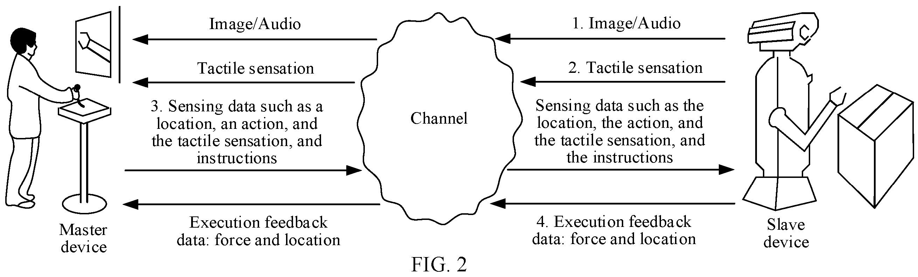

For example, with reference to FIG. 2, FIG. 2 shows synchronous transmission of a plurality of data flows in a multi-sensory control scenario in the multi-modal service. Both a master (master) device and a slave (slave) device in FIG. 2 are terminal devices. A channel (community channel, comm.Channel) may be implemented based on a communication network in the foregoing communication system. An access network device in the communication network may be configured to forward and process data from the master device and the slave device, to implement communication between the master device and the slave device. In addition, the slave device may send, to the master device through the channel, data related to an image (Video) and audio (Audio), or may send, to the master device through the channel, tactile data (or a tactile signal) obtained based on a tactile sensor. The tactile data (or the tactile signal) may be obtained by the slave device via the tactile sensor. For example, the tactile data (or the tactile signal) may be a collected surface texture (surface texture). The master device may send, through the channel, sensing data such as a location, an action, and tactile sensation, and instructions to the slave device. The slave device executes the instructions from the master device to obtain execution feedback data, and sends, through the channel, the execution feedback data to the master device. The execution feedback data may include data related to a force and the location.

### 3. Multi-level pre-scheduling

A multi-level pre-scheduling technology is an uplink pre-scheduling technology that is applicable to tactile transmission. A terminal does not need to obtain an uplink grant during uplink pre-scheduling, and an access network device may allocate and schedule a resource to the terminal for uplink data transmission. A procedure of the multi-level pre-scheduling technology may be as follows. (1) The access network device allocates two parts of resources: a first resource (a dedicated resource) and a second resource (a shared resource) to the terminal, where the first resource is allocated to the terminal by default, and the second resource is allocated to a plurality of terminals for sharing. (2) The terminal determines, based on a data amount, whether to use the second resource, and if the first resource is incapable of carrying the data amount, may perform data transmission by using the first resource and a third resource (where the third resource is a part or all of the second resource). (3) The terminal sends UCI to indicate usage of the second resource by the terminal, where the UCI may be a piece of newly added UCI, or may be obtained by modifying a field in a piece of existing UCI. This is not limited in embodiments of this application. For ease of description, information indicating the usage of the second resource by the terminal is represented as first information throughout subsequently.

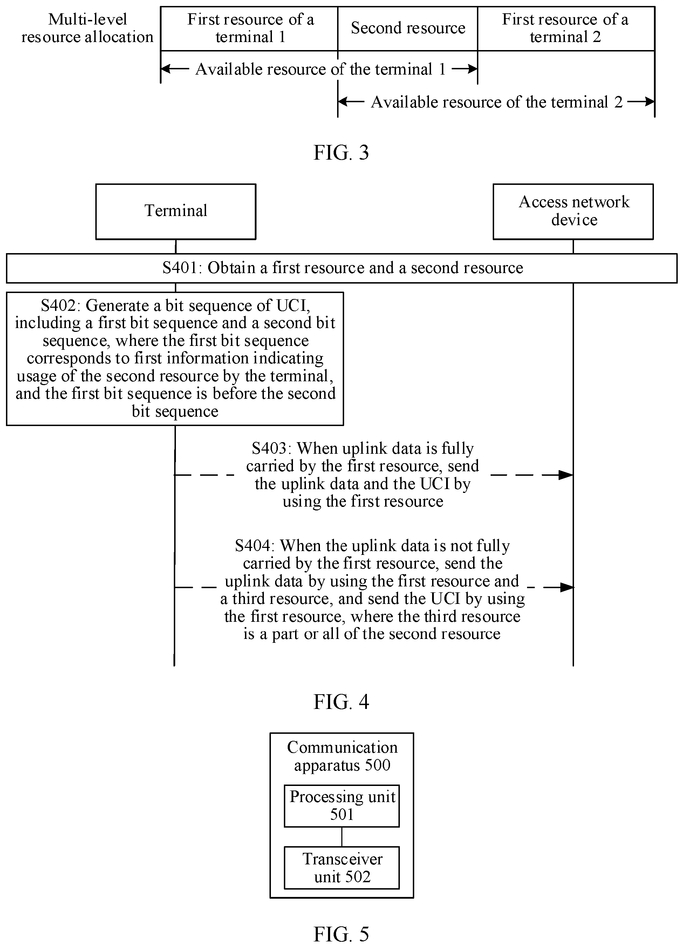

For example, FIG. 3 shows multi-level resource allocation for a plurality of terminals. In FIG. 3, a first resource of a terminal 1 is allocated to the terminal 1 by default, a first resource of a terminal 2 is allocated to the terminal 2 by default, and a second resource is allocated to the terminal 1 and the terminal 2. If the first resource of the terminal 1 is capable of completely carrying a data amount of the terminal 1, data transmission of the terminal 1 may be performed only by using the first resource of the terminal 1; or if the first resource of the terminal 1 is incapable of completely carrying the data amount of the terminal 1, data transmission of the terminal 1 may be performed by using both the first resource of the terminal 1 and the second resource. This is the same for the terminal 2. Details are not described again. In embodiments of this application, the terminal 1 may send the first information to indicate the usage of the second resource by the terminal 1.

### 4. Configured grant (configured grant, CG)

The CG is a mechanism in which some resources (to be specific, PUSCH resources mentioned in this application) are pre-configured for a terminal in an uplink. Subsequently, when having to-be-transmitted uplink data, the terminal does not need to send, to an access network device, a scheduling request for uplink data transmission, and may perform uplink transmission by using the pre-configured PUSCH resources, to reduce uplink transmission latency. One transport block (transport block, TB) and at least one (one or more) PUSCH resource(s) may be usually configured in one CG period.

It should be noted that duration of one CG period is equal to a CG cycle. The PUSCH resource in the CG period mentioned in this application may also be referred to as a CG uplink resource, a CG PUSCH resource, a CG PUSCH transmission resource, a CG PUSCH transmission occasion, or the like in another solution.

### 5. Uplink control information (uplink control information, UCI)

The UCI may usually include one or more of the following information: configured grant uplink control information (configured grant uplink control information, CG-UCI), hybrid automatic repeat request (hybrid automatic repeat request, HARQ) feedback information, or channel state information (channel state information, CSI).

The HARQ feedback information is ACK information (indicating that data is successfully received) or NACK information (indicating that data fails to be received or no data is received). Therefore, the HARQ feedback information is related to service stability. The CSI includes a CSI part 1 and a CSI part 2. A payload size of the CSI part 1 is fixed, and is used to determine an information bit of the CSI part 2. The CSI part 1 is usually transmitted before the CSI part 2. The CSI may reflect state information of a transmission channel between two communication parties. Processing the transmission channel based on the CSI facilitates high-reliability and low-latency transmission between the two communication parties. Therefore, the CSI is related to service reliability. The CG-UCI includes information indicating a HARQ process (for example, a HARQ process number), and the HARQ process number facilitates correct transmission and reliable transmission of a service.

In embodiments of this application, the UCI may further include first information, where the first information indicates usage of a second resource by a terminal. An access network device may decode a PUSCH based on the first information. Therefore, the first information is related to information transmission reliability.

It should be noted that, transmission of the UCI may be performed through a physical uplink control channel (physical uplink control channel, PUCCH) or a PUSCH. The following descriptions of this application are mainly for a case in which the UCI is multiplexed on the PUSCH (that is, the transmission of the UCI is performed through the PUSCH).

A terminal device may obtain a first resource and a second resource. When uplink data is fully carried by the first resource, the terminal may send the uplink data and the UCI by using the first resource; and when the uplink data is not fully carried by the first resource, the terminal may send the uplink data by using the first resource and a third resource, and send the UCI by using the first resource, where the third resource is a part or all of the second resource. In this case, the terminal may send first information to the access network device to indicate usage of the second resource by the terminal. If PUSCH resources are limited (to be specific, the PUSCH resources are insufficient to perform transmission of all bit sequences of the UCI), when the UCI includes a plurality of pieces of information including the first information and second information, how to perform generation and transmission of the UCI is an urgent problem to be resolved.

This application provides a UCI transmission method. When PUSCH resources are limited, if UCI includes a plurality of pieces of information including first information and second information, a terminal preferentially maps a bit sequence corresponding to the first information, to improve information transmission reliability, and facilitate service transmission. The following separately provides descriptions by using the following embodiments. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The following describes a communication method provided in embodiments of this application. It may be understood that an example in which an access network device and a terminal serve as execution bodies of an interaction example is used for description in this application. However, the execution body of the interaction example is not limited in this application. For example, a method performed by the access network device in this application may alternatively be performed by a module (for example, a chip, a chip system, or a processor) used in the access network device, or may be implemented by a logical node, a logical module, or software that can implement all or a part of functions of the access network device. A method performed by the terminal in this application may alternatively be performed by a module (for example, a chip, a chip system, or a processor) used in the terminal, or may be implemented by a logical node, a logical module, or software that can implement all or a part of functions of the terminal.

FIG. 4 is an interaction diagram of a UCI transmission method according to an embodiment of this application. As shown in FIG. 4, the communication method may include at least the following steps. S403 and S404 are parallel optional steps.

S401: A terminal and an access network device obtain a first resource and a second resource.

The access network device may allocate two parts of resources: the first resource and the second resource to the terminal. The two parts of resources may be statically configured, for example, may be pre-configured or specified in a protocol; or may be dynamically configured through exchange of instructions/information, and the like. This is not limited in this application.

The first resource may be understood as a dedicated resource allocated to the terminal by default, and the second resource may be understood as a shared resource allocated to a plurality of terminals including the terminal. When uplink data is fully carried by the first resource, the terminal may perform data transmission by using the first resource; and when the uplink data is not fully carried by the first resource, the terminal may perform data transmission by using the first resource and a part or all of the second resource (a third resource mentioned in embodiments). For example, the first resource and the second resource may be PUSCH resources.

S402: The terminal generates a bit sequence of UCI, including a first bit sequence and a second bit sequence, where the first bit sequence corresponds to first information indicating usage of the second resource by the terminal, and the first bit sequence is before the second bit sequence.

The terminal may generate the bit sequence of the UCI, where the bit sequence of the UCI may include the first bit sequence and the second bit sequence. The first bit sequence corresponds to the first information, the first information indicates the usage of the second resource by the terminal, the second bit sequence corresponds to second information, the second information includes one or more of: HARQ feedback information or information indicating an unused transmission occasion, the first bit sequence is before the second bit sequence, a length of the first bit sequence is greater than or equal to 1, and a length of the second bit sequence is greater than or equal to 1.

The first information may indicate the usage of the second resource by the terminal in the following several possible implementations.

In a possible implementation, when the uplink data is fully carried by the first resource, the terminal sends the uplink data and the UCI by using the first resource. In this case, the first information may indicate that the terminal does not use the second resource.

In another possible implementation, when the uplink data is not fully carried by the first resource, the terminal sends the uplink data by using the first resource and the third resource. In this case, the first information may indicate that the terminal uses the second resource, further optionally, may indicate that the terminal does not use a resource other than the third resource in the second resource, further optionally, may indicate specific resources of the second resource that are used by the terminal, and the like.

After generating the bit sequence of the UCI, the terminal may output the bit sequence of the UCI to a next processing module, so that the next processing module processes the bit sequence of the UCI, for example, determines a quantity of coded modulation symbols corresponding to the bit sequence of the UCI and a quantity of coded modulation symbols corresponding to a bit sequence that is of the UCI and that is mapped to the first resource, and sends, to the access network device, final UCI obtained through the processing.

S403: When the uplink data is fully carried by the first resource, the terminal sends the uplink data and the UCI by using the first resource.

S404: When the uplink data is not fully carried by the first resource, the terminal sends the uplink data by using the first resource and the third resource, and sends the UCI by using the first resource, where the third resource is a part or all of the second resource.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In this embodiment of this application, when generating the bit sequence of the UCI, the terminal can ensure that the bit sequence corresponding to the first information is before the bit sequence corresponding to the second information, so that when resources are limited, the bit sequence corresponding to the first information can be preferentially mapped to a transmission resource, thereby improving information transmission reliability, and facilitating service transmission.

The following describes in detail a specific implementation of S402.

In S402, UCI determined to be sent by the terminal includes the second information and the first information (pooling-UCI is used as an example below for description) that indicates the usage of the second resource by the terminal. The second information includes one or more of: the HARQ feedback information or the information indicating the unused transmission occasion (unused transmission occasion (unused transmission occasion, UTO)-UCI is used as an example below). Alternatively, the second information includes one or more of: the HARQ feedback information or information (for example, CG-UCI) indicating a HARQ process. It may be understood that, the UTO-UCI is applicable to a licensed frequency band, and the CG-UCI is applicable to an unlicensed frequency band. Therefore, the UTO-UCI and the CG-UCI do not coexist. If a higher-layer parameter cg_RetransmissionTimer is configured, the CG-UCI exists. If a higher-layer parameter nrof_UTO_UCI is configured, the UTO-UCI exists. The following provides descriptions by using the UTO-UCI merely as an example of one or more pieces of information included in the second information. It may be understood that, when the CG-UCI exists, all symbols that appear below and the UTO-UCI in the specification may be replaced with the CG-UCI, and transmission of the UTO-UCI through a PUSCH is replaced with higher-layer parameter CG-UCI multiplexing.

The bit sequence of the UCI includes the first bit sequence corresponding to the first information and the second bit sequence corresponding to the second information. When the UCI is multiplexed on the first resource, in the bit sequence that is of the UCI and that is generated by the terminal, the first bit sequence corresponding to the first information is before the second bit sequence corresponding to the second information. That the UCI is multiplexed on the first resource may be understood as that transmission of the first information and the second information is performed through the PUSCH. Specifically, if the first information is the pooling-UCI, and the second information is the HARQ feedback information, transmission of the pooling-UCI and the HARQ feedback information is performed through the PUSCH. If the second information is the UTO-UCI, transmission of the pooling-UCI and the UTO-UCI is performed through the PUSCH. If the second information is the HARQ feedback information and the UTO-UCI, transmission of the pooling-UCI, the HARQ feedback information, and the UTO-UCI is performed through the PUSCH.

It should be understood that in this application, that in the bit sequence of the UCI, an A bit sequence is before a B bit sequence may include at least one or more of the following understandings. ①. In the bit sequence of the UCI, a location of the A bit sequence is before a location of the B bit sequence. ②. When a bit index value of a last bit in the A bit sequence in the bit sequence of the UCI is less than a bit index value of a 1^{st} bit in the B bit sequence in the bit sequence of the UCI, it is considered that the A bit sequence is before the B bit sequence. ③. When resource mapping is performed on the bit sequence of the UCI, and the A bit sequence is mapped before the B bit sequence, it is considered that the A bit sequence is before the B bit sequence. ④. In the bit sequence of the UCI, if a priority of the A bit sequence is higher than a priority of the B bit sequence, it is considered that the A bit sequence is before the B bit sequence. ⑤. During transmission of the bit sequence of the UCI, if a reserved resource (a resource configured for transmission of the A bit sequence) corresponding to the A bit sequence cannot be used for the B bit sequence, it is considered that the A bit sequence is before the B bit sequence. Similarly, in this application, that in the bit sequence of the UCI, the B bit sequence is after the A bit sequence may include at least one or more of the following understandings. ①. In the bit sequence of the UCI, the location of the B bit sequence is after the location of the A bit sequence. ②. When the bit index value of the 1^{st} bit in the B bit sequence in the bit sequence of the UCI is greater than the bit index value of the last bit in the A bit sequence in the bit sequence of the UCI, it is considered that the B bit sequence is after the A bit sequence. ③. When resource mapping is performed on the bit sequence of the UCI, and the A bit sequence is mapped before the B bit sequence, it is considered that the B bit sequence is after the A bit sequence. ④. In the bit sequence of the UCI, if the priority of the B bit sequence is lower than the priority of the A bit sequence, it is considered that the B bit sequence is after the A bit sequence. ⑤. During transmission, if the reserved resource (the resource configured for transmission of the A bit sequence) corresponding to the A bit sequence cannot be used for the B bit sequence, it is considered that the B bit sequence is after the A bit sequence. This is applicable throughout the specification.

The UCI includes the first information and the second information. For a priority of the first information and a priority of the second information, the bit sequence that is of the UCI and that is generated by the terminal, a determined quantity of coded modulation symbols corresponding to the bit sequence of the UCI, and the quantity of coded modulation symbols corresponding to the bit sequence that is of the UCI and that is mapped to the first resource are different. The following illustratively describes, in the following several cases, the bit sequence that is of the UCI and that is generated by the terminal.

Case 1: The priority of the first information is the same as the priority of the second information.

For generation of the bit sequence of the UCI, the first bit sequence is before the second bit sequence.

Implementation 1: The terminal obtains first indication information, where the first indication information indicates that the priority of the first information is the same as the priority of the second information. Further, the terminal generates the bit sequence of the UCI based on the first indication information. A front-to-back order of bit sequences in the bit sequence of the UCI is: the first bit sequence and the second bit sequence.

For example, the UCI determined to be sent by the terminal includes the first information and the second information, the second information includes one or more of: the HARQ feedback information or the UTO-UCI, the first bit sequence corresponding to the first information includes *O_{Pooling-UCI}* bits, and the first bit sequence is a₀, ... , a_{*OPooling-UCI*-1}. If the second information includes the HARQ feedback information, the second bit sequence corresponding to the second information includes *O_{HARQ}* bits, and the second bit sequence is ${a}_{0}^{\left(1\right)} , … , {a}_{{O}_{HARQ - 1}}^{\left(1\right)}$. If the second information includes the UTO-UCI information, the second bit sequence includes *O*_{UTO-UCI} bits, and the second bit sequence is ${a}_{0}^{\left(1\right)} , … , {a}_{{O}_{UTO - UCI - 1}}^{\left(1\right)}$. If the second information includes the HARQ feedback information and the UTO-UCI information, the second bit sequence includes ( *O_{HARQ}* + *O*_{UTO-UCI}) bits, and the second bit sequence is ${a}_{0}^{\left(1\right)} , … , {a}_{{O}_{HARQ - 1}}^{\left(1\right)} , {a}_{0}^{\left(2\right)} , … , {a}_{{O}_{UTO - UCI - 1}}^{\left(2\right)}$. There is an interval of m bits between the first bit sequence and the second bit sequence, where m is an integer greater than or equal to 0. When m is equal to 0, a last bit of the first bit sequence and a 1^{st} bit of the second bit sequence are consecutive (that is, bit index values are consecutive).

The first indication information may be carried in a radio resource control (radio resource control, RRC) signaling message, or may be carried in a downlink control information (downlink control information, DCI) message. This is not specifically limited in this application.

For example, after the terminal establishes a communication connection to the access network device, the access network device sends the first indication information to the terminal by using the RRC signaling message, where the first indication information includes: A priority index value of the first information is an index value of 1, and a priority index value of the second information is an index value of 1. A larger priority index value indicates a higher priority. When both the priority index value of the first information and the priority index value of the second information are the index values of 1, the first indication information indicates that the priority of the first information is the same as the priority of the second information.

Optionally, in Implementation 2, the first information and the second information may alternatively be jointly coded, to be specific, the terminal performs joint channel coding on the first bit sequence and the second bit sequence in the bit sequence of the UCI.

For example, when the first information and the second information are jointly coded, in the generated bit sequence of the UCI, the last bit of the first bit sequence corresponding to the first information and the 1^{st} bit of the second bit sequence corresponding to the second information are consecutive (that is, the bit index values are consecutive). For example, in the foregoing example of the bit sequence in Implementation 1, if m is 0, and the second information includes the HARQ feedback information, the bit sequence of the UCI may be: *α*₀ *α*₁, ..., *α*_{*OPooling*-*UCI*-1}, *α*_{*OPooling*-*UCI*}, *α*_{*OPooling*-*UCI*+1}, ..., *α*_{*OPooling*-*UCI*+*HARQ*-1}. The first bit sequence corresponding to the first information includes *O*_{*Pooling*-*UCI*} bits, and the first bit sequence is *α*₀, ..., *α*_{*OPooling*-*UCI*-1}; and the second bit sequence corresponding to the second information includes *O_{HARQ}* bits, and the second bit sequence is *α*₀, *α*₁, ..., *α*_{*OHARQ*-1}*.* If m is 0, and the second information includes the UTO-UCI information, the bit sequence of the UCI may be: *α*₀, *α*₁, *..., α*_{*OPooling*-*UCI*-1}, *α*_{*OPooling*-*UCI*}, *α*_{*OPooling*-*UCI*+1}, ... , *α*_{*OPooling*-*UCI*+*UTO*-*UCI*-1.} The first bit sequence corresponding to the first information includes *O_{Pooling-UCI}* bits, and the first bit sequence is *α*₀, *..., α*_{*OPooling*-*UCI*-1}; and the second bit sequence corresponding to the second information includes *O_{UTO-UCI}* bits, and the second bit sequence is *α*₀, *α*₁, ..., *α*_{*OUTO*-*UCI*-1}. If m is 0, and the second information includes the HARQ feedback information and the UTO-UCI information, the bit sequence of the UCI may be: *α*₀, *α*₁, ..., *α*_{*OPooling*-*UCI*-1}, *α*_{*OPooling*-*UCI*}, *α*_{*OPooling*-*UcI*+1}, ..., *α*_{*OPooling*-*UCI*+*HARQ*+*UTO*-*UCI*-1}. The first bit sequence corresponding to the first information includes *O*_{*Pooling*-*UCI*} bits, and the first bit sequence is *α*₀, ... , *α*_{*OPooling*-*UCI*-1}; and the second bit sequence corresponding to the second information includes (*O_{HARQ}* + *O*_{*UTO*-*UCI*}) bits, and the second bit sequence is *α*₀, *α*₁, ... , *α*_{*OHARQ*-1}, *α*₀, *α*₁, ... , *α*_{*O*UTO-UCI-1}.

Case 2: The priority of the first information is different from the priority of the second information.

For generation of the bit sequence of the UCI, the first bit sequence is before a bit sequence corresponding to information having a lower priority than the first information.

Implementation 3: By default (which is also understood as specified in a communication protocol, where this is applicable throughout the specification), a descending order of priorities is: the first information and the second information; or it is understood as that by default, the front-to-back order of bit sequences is: the first bit sequence and the second bit sequence. Further, the terminal generates the bit sequence of the UCI based on the priority of the first information being higher than the priority of the second information. The front-to-back order of the bit sequences in the bit sequence of the UCI is: the first bit sequence and the second bit sequence. The generated bit sequence of the UCI in this example is shown as the bit sequence of the UCI in Case 1. Details are not described herein again.

Implementation 4: The terminal obtains second indication information, where the second indication information indicates that the priority of the first information is higher than the priority of the second information. Further, the terminal generates the bit sequence of the UCI based on the second indication information. The second indication information may be carried in an RRC signaling message, or may be carried in a DCI message. This is not specifically limited in this application.

For example, after the terminal establishes the communication connection to the access network device, the access network device sends the second indication information to the terminal by using the RRC signaling message, where the second indication information includes: A priority index value of the first information is an index value of 1, and a priority index value of the second information is an index value of 0. A larger priority index value indicates a higher priority. To be specific, when the index value of 1 is greater than the index value of 0, the second indication information indicates that the priority of the first information is higher than the priority of the second information. The generated bit sequence of the UCI in this example is shown as the bit sequence of the UCI in Implementation 1. Details are not described herein again.

After generating the bit sequence of the UCI, the terminal may output the bit sequence of the UCI to the next processing module, so that the next processing module processes the bit sequence of the UCI, for example, determines the quantity of coded modulation symbols corresponding to the bit sequence of the UCI and the quantity of coded modulation symbols corresponding to the bit sequence that is of the UCI and that is mapped to the first resource, and sends, to the access network device, the final UCI obtained through the processing.

In other words, after generating the bit sequence of the UCI, a module that generates the bit sequence of the UCI and that is of the terminal sends the bit sequence of the UCI to a CRC adding module to add CRC to the bit sequence of the UCI, then a channel coding module performs channel coding on a bit sequence that is of the UCI and that has been processed by the CRC adding module, a modulation module modulates a bit sequence that is of the UCI and that has been processed by the channel coding module, and a resource mapping module maps, to the first resource, a bit sequence that is of the UCI and that has been processed by the modulation module, that is, the processed bit sequence of the UCI is sent to the access network device by using the first resource. It may be understood that, when the first resource is limited, the resource mapping module performs mapping sequentially in the order of the bit sequences in the bit sequence of the UCI. This may cause a case in which a bit sequence at a back location in the bit sequence of the UCI is not sent to the access network device, in other words, the access network device may receive a part of the processed bit sequence of the UCI when resources are limited.

The following specifically describes determining the quantity of coded modulation symbols and the resource mapping of the bit sequence of the UCI.

With reference to Implementation 1, Implementation 3, and Implementation 4, after the bit sequence of the UCI is generated (no joint channel coding is performed on the first bit sequence and the second bit sequence in the bit sequence of the UCI), the quantity of coded modulation symbols corresponding to the bit sequence of the UCI may be determined. Specifically, a quantity of coded modulation symbols corresponding to the first bit sequence may be determined based on a quantity of bits of the first bit sequence and a quantity of CRC bits of the first bit sequence, and a quantity of coded modulation symbols corresponding to the second bit sequence may be determined based on the quantity of coded modulation symbols corresponding to the first bit sequence. Examples are as follows.

Example 1: If transmission of the UCI and transmission of the uplink data are simultaneously performed through the PUSCH, and a TBoMS is not configured or a TBoMS is configured but a value of numberOfSlotsTBoMS is 1, the quantity of coded modulation symbols corresponding to the first bit sequence satisfies: ${Q}_{Pooling - UCI}^{′} = min \left\{\begin{matrix}\left⌈\frac{\left({O}_{Pooling - UCI}+{L}_{Pooling - UCI}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \\ \left⌈α⋅{\sum }_{l = {l}_{0}}^{{N}_{symb , all}^{PUSCH} - 1} {M}_{sc}^{UCI} \left(l\right)\right⌉\end{matrix}\right\}$

*Q'_{Pooling-UCI}* represents the quantity of coded modulation symbols corresponding to the first bit sequence; *O*_{*Pooling*-*UCI*} represents the quantity of bits of the first bit sequence; *L*_{*Pooling*-*UCI*} represents the quantity of CRC bits of the first bit sequence; $⋅ {β}_{offset}^{PUSCH}$ represents an offset value, for changing a quantity of resources occupied by the UCI, to adjust a bit rate of the UCI; ${N}_{symb , all}^{PUSCH}$ represents a quantity of symbols of the PUSCH; ${M}_{sc}^{UCI} \left(l\right)$ represents a quantity of REs occupied by the UCI in an *l*^{th} symbol; *C*_{*UL*-*SCH*} represents a quantity of code blocks of an uplink shared channel (uplink shared channel, UL-SCH) for PUSCH transmission, where if a DCI format for scheduling the PUSCH transmission includes a code block group transmission information (code block group transmission information, CBGTI) field indicating that the terminal does not perform transmission of an r^{th} code block, *Kᵣ*=0; or if the DCI format for scheduling the PUSCH transmission includes the code block group transmission information field, *Kᵣ* is a size of the r^{th} code block of the UL-SCH for the PUSCH transmission; *α* represents a scaling (scaling) parameter; and *l*₀ represents a 1^{st} symbol after a DMRS.

If the second information includes the HARQ feedback information, the quantity of coded modulation symbols corresponding to the second bit sequence satisfies: ${Q}_{ACK}^{′} = min \left\{\left⌈\frac{\left({O}_{ACK}+{L}_{ACK}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉, \left⌈\begin{matrix}α ⋅ {\sum }_{l = {l}_{0}}^{{N}_{symb , all}^{PUSCH} - 1} {M}_{sc}^{UCI} \left(l\right) \\ - {Q}_{Pooling - UCI}^{′}\end{matrix}\right⌉\right\}$

*Q'_{ACK}* represents a quantity of coded modulation symbols corresponding to the HARQ feedback information; *O_{ACK}* represents a quantity of bits of a bit sequence corresponding to the HARQ-ACK; and *L_{ACK}* represents a quantity of CRC bits of the bit sequence corresponding to the HARQ-ACK, where if *O_{ACK}* ≥ 360, *L_{ACK}* = 11; or if *O_{ACK}*<360*,* a coding rule of a polar code is used for calculation.

If the second information includes the UTO-UCI information, the quantity of coded modulation symbols corresponding to the second bit sequence satisfies: ${Q}_{UTO - UCI}^{′} = min \left\{\left⌈\frac{\left({O}_{UTO - UCI}+{L}_{UTO - UCI}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉, \left⌈\begin{matrix}α \\ ⋅ {\sum }_{l = {l}_{0}}^{{N}_{symb , all}^{PUSCH} - 1} {M}_{sc}^{UCI} \left(l\right) - {Q}_{Pooling - UCI}^{′}\end{matrix}\right⌉\right\}$

Q'_{UTO-UCI} represents a quantity of coded modulation symbols corresponding to the UTO-UCI; O_{UTO-UCI} represents a quantity of bits of a bit sequence corresponding to the UTO-UCI; and L_{UTO-UCI} represents a quantity of CRC bits of the bit sequence corresponding to the UTO-UCI, where if *O_{ACK}* ≥ 360, *L_{ACK}* = 11; or if *O_{ACK}*<360, a coding rule of a polar code is used for calculation.

If the second information includes the HARQ feedback information and the UTO-UCI information, the quantity of coded modulation symbols corresponding to the second bit sequence satisfies: Q'_{ACK} + Q'_{UTO-UCI}.

Example 2: If transmission of the UCI and transmission of the uplink data are simultaneously performed through the PUSCH, and a repeated transmission type B (TypeB) is not used or a TBoMS is configured but a value of numberOfSlotsTBoMS is *Nₛ*, where *Nₛ* is greater than 1, a factor $\frac{1}{{N}_{s}}$ is added to a denominator of the formula satisfied by each of quantities of coded modulation symbols corresponding to the first bit sequence and the second bit sequence in Example 1.

After coded modulation symbols corresponding to the first bit sequence and the second bit sequence that are included in the UCI are determined, the corresponding coded modulation symbols may be mapped to the first resource. Specifically, because the first bit sequence is before the second bit sequence, the coded modulation symbol corresponding to the first bit sequence may be mapped starting from an RB with a smallest sequence number in the first resource.

When the quantity of bits of the bit sequence is greater than 2, the coded modulation symbol corresponding to the bit sequence may be mapped starting from a 1^{st} OFDM symbol after a 1^{st} DMRS, or starting from a 1^{st} OFDM symbol that is not for transmission of a DMRS. The mapping may follow a rule of consecutive mapping (to be specific, the bit sequence is consecutively mapped to REs of an OFDM symbol) and a rule of distributed mapping (to be specific, the bit sequence is evenly mapped to the REs of the OFDM symbol in a distributed manner).

When the quantity of bits in the bit sequence is less than or equal to 2, mapping may be performed according to a puncturing method. Specifically, the coded modulation symbol corresponding to the bit sequence may be mapped to a physical resource that is reserved for information corresponding to the bit sequence and that is in the first resource. Because the first bit sequence is before the second bit sequence, the coded modulation symbol corresponding to the first bit sequence may be mapped to physical resources/a physical resource that are/is reserved for the first information and/or the second information and that are/is in the first resource. In a possible implementation, the coded modulation symbol corresponding to the first bit sequence may be mapped to the physical resource that is reserved for the first information and that is in the first resource, or it is understood as that a physical resource location of the first information is first reserved, and after other information is mapped, the coded modulation symbol corresponding to the first bit sequence is finally mapped to the reserved physical resource. In another possible implementation, the coded modulation symbol corresponding to the first bit sequence may be mapped to the physical resources that are reserved for the first information and the second information and that are in the first resource, or it is understood as that physical resource locations of the first information and the second information are first reserved, and after other information and the second information are mapped, the coded modulation symbol corresponding to the first bit sequence is finally mapped to the reserved physical resources. For the reserved physical resource locations of the first information and the second information, if the second bit sequence has occupied a part or all of reserved physical resources, and consequently, a physical resource that the first bit sequence needs for mapping is insufficient, the first bit sequence may occupy the mapped physical resource of the second bit sequence for mapping. In other words, the physical resource may be shared by the first bit sequence and the second bit sequence. When the second bit sequence is mapped to the reserved physical resource, and the reserved physical resource is insufficient for mapping the first bit sequence, a coded first bit sequence that is not mapped due to the insufficient resource may be mapped to the physical resource used by the second bit sequence. The physical resource may be a resource element RE, a resource block RB, or the like.

With reference to Implementation 2, after joint channel coding is performed on the first bit sequence and the second bit sequence in the bit sequence of the UCI, the quantity of coded modulation symbols corresponding to the bit sequence of the UCI may be determined. Examples are as follows.

Example 3: If transmission of the UCI and transmission of the uplink data are simultaneously performed through the PUSCH, and a transport block over multi-slot (transmission block over multi-slot, TBoMS) is not configured or the TBoMS is configured but a value of numberOfSlotsTBoMS is 1, each of quantities of coded modulation symbols corresponding to the first bit sequence and the second bit sequence satisfies: $\begin{matrix}{Q}_{Pooling - UCI / HARQ / UTO - UCI}^{′} \\ = min \left\{\begin{matrix}\left⌈\frac{\left({O}_{Pooling - UCI / HARQ / UTO - UCI}+{L}_{Pooling - UCI / HARQ / UTO - UCI}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \\ \left⌈α⋅{\sum }_{l = {l}_{0}}^{{N}_{symb , all}^{PUSCH} - 1} {M}_{sc}^{UCI} \left(l\right)\right⌉\end{matrix}\right\}\end{matrix}$

Q'_{Pooling-UCI/HARQ/UTO-UCI} represents each of the quantities of coded modulation symbols corresponding to the first bit sequence and the second bit sequence; O_{Pooling-UCI/HARQ/UTO-UCI} represents each of quantities of bits of the first bit sequence and the second bit sequence; and L_{Pooling-UCI/HARQ/UTO-UCI} represents each of quantities of CRC bits of the first bit sequence and the second bit sequence.

Example 4: If transmission of the UCI and transmission of the uplink data are simultaneously performed through the PUSCH, and a repeated transmission type B (TypeB) is not used or a TBoMS is configured but a value of numberOfSlotsTBoMS is *Nₛ*, where *Nₛ* is greater than 1, a factor $\frac{1}{{N}_{s}}$ is added to a denominator of the formula satisfied by each of quantities of coded modulation symbols corresponding to the joint channel coded first bit sequence and second bit sequence in Example 3.

After coded modulation symbols corresponding to the joint channel coded first bit sequence and second bit sequence that are included in the UCI are determined, the corresponding coded modulation symbols may be mapped to the first resource. Specifically, because the first bit sequence is before the second bit sequence, the coded modulation symbol corresponding to the first bit sequence may be mapped starting from an RB that is with the smallest sequence number and that is in the first resource.

When a quantity of bits of a bit sequence obtained through joint channel coding on the first bit sequence and the second bit sequence is greater than 2, for example, the second information includes the HARQ feedback information or the UTO-UCI, a quantity of bits of a bit sequence corresponding to pooling-UCI HARQ feedback information/UTO-UCI is greater than 2; or the second information includes the HARQ feedback information and the UTO-UCI, a quantity of bits of a bit sequence corresponding to pooling-UCI HARQ feedback information UTO-UCI is also greater than 2. The coded modulation symbol corresponding to the bit sequence may be mapped starting from a 1^{st} OFDM symbol after a 1^{st} DMRS, or starting from a 1^{st} OFDM symbol that is not for transmission of a DMRS. The mapping may follow a rule of consecutive mapping (to be specific, the bit sequence is consecutively mapped to REs of an OFDM symbol) and a rule of distributed mapping (to be specific, the bit sequence is evenly mapped to the REs of the OFDM symbol in a distributed manner).

When the quantity of bits of the bit sequence obtained through joint channel coding on the first bit sequence and the second bit sequence is less than or equal to 2, for example, the second information includes the HARQ feedback information or the UTO-UCI, if a quantity of bits of a bit sequence corresponding to pooling-UCI HARQ feedback information (without the UTO-UCI) is 0, 1, or 2; or if a quantity of bits of a bit sequence corresponding to pooling-UCI UTO-UCI (without the HARQ feedback information) is 0, 1, or 2, mapping may be performed according to a puncturing method. Specifically, the coded modulation symbol corresponding to the bit sequence may be mapped to a physical resource that is reserved for information corresponding to the bit sequence and that is in the first resource. The coded modulation symbol corresponding to the bit sequence obtained through joint channel coding on the first bit sequence and the second bit sequence may be mapped to the reserved physical resource in the first resource. Alternatively, it is understood as that the physical resource locations of the first information and the second information are first reserved, and after other information is mapped, the coded modulation symbol corresponding to the bit sequence obtained through joint channel coding on the first bit sequence and the second bit sequence is finally mapped to the reserved physical resource.

For a specific implementation of S402, further optionally, the UCI may further include third information on the basis of including the first information and the second information, where the third information is CSI. In this case, the bit sequence of the UCI includes the first bit sequence corresponding to the first information, the second bit sequence corresponding to the second information, and a third bit sequence corresponding to the CSI. Lengths of the first bit sequence, the second bit sequence, and the third bit sequence each are greater than or equal to 1. The CSI may include a first part of CSI (also referred to as a CSI part 1) and a second part of CSI (also referred to as a CSI part 2). In this case, the bit sequence of the UCI includes the first bit sequence corresponding to the first information, the second bit sequence corresponding to the second information, a fourth bit sequence corresponding to the CSI part 1, and a fifth bit sequence corresponding to the CSI part 2, and lengths of the first bit sequence, the second bit sequence, the fourth bit sequence, and the fifth bit sequence each are greater than or equal to 1.

The UCI includes the first information, the second information, and the CSI. For the priority of the first information, the priority of the second information, and a priority of the CSI, the bit sequence that is of the UCI and that is generated by the terminal, the determined quantity of coded modulation symbols corresponding to the bit sequence of the UCI, and the quantity of coded modulation symbols corresponding to the bit sequence that is of the UCI and that is mapped to the first resource are different. The following illustratively describes, in the following several cases, the bit sequence that is of the UCI and that is generated by the terminal.

Case 3: The priority of the first information, the priority of the second information, and the priority of the CSI are the same.

For generation of the bit sequence of the UCI, the first bit sequence is before the second bit sequence, and the second bit sequence is before a third bit sequence.

Implementation 5: The terminal obtains third indication information, where the third indication information indicates that the priority of the first information, the priority of the second information, and the priority of the CSI are the same. Further, the terminal generates the bit sequence of the UCI based on the third indication information. A front-to-back order of bit sequences in the bit sequence of the UCI is: the first bit sequence, the second bit sequence, and the third bit sequence.

For example, the UCI determined to be sent by the terminal includes the first information, the second information, and the CSI, and the second information includes one or more of: the HARQ feedback information or the UTO-UCI. The first bit sequence corresponding to the first information includes *O*_{*Pooling*-*UCI*} bits, and the first bit sequence is a₀, ... , a_{*OPooling-UCI*-1}. The third bit sequence corresponding to the CSI includes *O_{CSI}* bits, and the third bit sequence corresponding to the CSI is ${a}_{0}^{\left(2\right)} , … , {a}_{{O}_{CSI - 1}}^{\left(2\right)}$. If the second information includes the HARQ feedback information, the second bit sequence corresponding to the second information includes *O_{HARQ}* bits, and the second bit sequence is ${a}_{0}^{\left(1\right)} , … , {a}_{{O}_{HARQ - 1}}^{\left(1\right)}$. If the second information includes the UTO-UCI information, the second bit sequence includes *O*_{UTO-UCI} bits, and the second bit sequence is ${a}_{0}^{\left(1\right)} , … , {a}_{{O}_{UTO - UCI - 1}}^{\left(1\right)}$. If the second information includes the HARQ feedback information and the UTO-UCI information, the second bit sequence includes (*O_{HARQ}*+*O*_{UTO-UCI}) bits, and the second bit sequence is ${a}_{0}^{\left(1\right)} , … , {a}_{{O}_{HARQ - 1}}^{\left(1\right)} , {a}_{0}^{\left(2\right)} , … , {a}_{{O}_{UTO - UCI - 1}}^{\left(2\right)}$. There is an interval of m bits between the first bit sequence and the second bit sequence, where m is an integer greater than or equal to 0. When m is equal to 0, a last bit of the first bit sequence and a 1^{st} bit of the second bit sequence are consecutive (that is, bit index values are consecutive). There is an interval of j bits between the second bit sequence and the third bit sequence, where j is an integer greater than or equal to 1.

The third indication information may be carried in an RRC signaling message, or may be carried in a DCI message. This is not specifically limited in this application. It may be understood that when Implementation 5 and Implementation 1 are combined for implementation, the third indication information and the first indication information may be carried in a same message or different messages. This is not specifically limited in this application.

For example, after the terminal establishes a communication connection to the access network device, the access network device sends the third indication information to the terminal by using the RRC signaling message, where the third indication information includes: A priority index value of the first information is an index value of 1, and a priority index value of the second information is an index value of 1, and a priority index value of the CSI is an index value of 1. A larger priority index value indicates a higher priority. When all the priority index value of the first information, the priority index value of the second information, and the priority index value of the CSI are the index value of 1, the third indication information indicates that the priority of the first information, the priority of the second information, and the priority of the CSI are the same.

Case 4: The priority of the first information, the priority of the second information, and the priority of the CSI are different.

For generation of the bit sequence of the UCI, the first bit sequence is before a bit sequence corresponding to information having a lower priority than the first information.

Implementation 6: By default (which is also understood as specified in a communication protocol, where this is applicable throughout the specification), a descending order of priorities is: the first information, the second information, and the CSI; or it is understood as that by default, the front-to-back order of bit sequences is: the first bit sequence, the second bit sequence, and the third bit sequence. Further, the terminal generates the bit sequence of the UCI based on the priority of the first information being higher than the priority of the second information and the priority of the second information being higher than the priority of the CSI. The front-to-back order of the bit sequences in the bit sequence of the UCI is: the first bit sequence, the second bit sequence, and the third bit sequence. The generated bit sequence of the UCI in this example is shown as the bit sequence of the UCI in Case 3. Details are not described herein again.

Implementation 7: By default (which is also understood as specified in a communication protocol, where this is applicable throughout the specification), a descending order of priorities is: the first information, the second information, the CSI part 1, and the CSI part 2; or it is understood as that by default, the front-to-back order of bit sequences is: the first bit sequence, the second bit sequence, the fourth bit sequence, and the fifth bit sequence. Further, the terminal generates the bit sequence of the UCI based on the priority of the first information being higher than the priority of the second information, the priority of the second information being higher than a priority of the CSI part 1, and the priority of the CSI part 1 being higher than a priority of the CSI part 2. The front-to-back order of the bit sequences in the bit sequence of the UCI is: the first bit sequence, the second bit sequence, the fourth bit sequence, and the fifth bit sequence.

Implementation 8: The terminal obtains fourth indication information, where the fourth indication information indicates that the priority of the first information is higher than the priority of the second information and that the priority of the second information is the same as the priority of the CSI. Further, the terminal generates the bit sequence of the UCI based on the fourth indication information. The fourth indication information may be carried in an RRC signaling message, or may be carried in a DCI message. This is not specifically limited in this application. It may be understood that when Implementation 8 and Implementation 4 are combined for implementation, the fourth indication information and the second indication information may be carried in a same message or different messages. This is not specifically limited in this application.

For example, after the terminal establishes a communication connection to the access network device, the access network device sends the fourth indication information to the terminal by using the RRC signaling message, where the fourth indication information includes: A priority index value of the first information is an index value of 1, a priority index value of the second information is an index value of 0, and a priority index value of the CSI is an index value of 0. A larger priority index value indicates a higher priority. To be specific, when the index value of 1 is greater than the index value of 0, the fourth indication information indicates that the priority of the first information is higher than the priority of the second information and that the priority of the first information is higher than the priority of the CSI. The generated bit sequence of the UCI in this example is shown as the bit sequence of the UCI in Implementation 5. Details are not described herein again.

Implementation 9: The terminal obtains fifth indication information, where the fifth indication information indicates that the priority of the first information is higher than the priority of the second information and that the priority of the second information, the priority of the CSI part 1, and the priority of the CSI part 2 are the same. Further, the terminal generates the bit sequence of the UCI based on the fifth indication information. The fifth indication information may be carried in an RRC signaling message, or may be carried in a DCI message. This is not specifically limited in this application. It may be understood that when Implementation 9 and Implementation 4 are combined for implementation, the fifth indication information and the second indication information may be carried in a same message or different messages. This is not specifically limited in this application.

For example, after the terminal establishes a communication connection to the access network device, the access network device sends the fifth indication information to the terminal by using the RRC signaling message, where the fifth indication information includes: A priority index value of the first information is an index value of 1, a priority index value of the second information is an index value of 0, a priority index value of the CSI part 1 is an index value of 0, and a priority index value of the CSI part 2 is an index value of 0. A larger priority index value indicates a higher priority. To be specific, when the index value of 1 is greater than the index value of 0, the fifth indication information indicates that the priority of the first information is higher than the priority of the second information and that the priority of the first information is higher than the priority of the CSI part 1 and the priority of the CSI part 2. The generated bit sequence of the UCI in this example is shown as the bit sequence of the UCI in Implementation 5. Details are not described herein again.

With reference to Implementation 5 and Implementation 6 to Implementation 9, after the bit sequence of the UCI is generated (no joint channel coding is performed on the first bit sequence and the second bit sequence in the bit sequence of the UCI and a bit sequence corresponding to the CSI), the quantity of coded modulation symbols corresponding to the bit sequence of the UCI may be determined. Specifically, the quantity of coded modulation symbols corresponding to the first bit sequence may be determined, and the quantity of coded modulation symbols corresponding to the second bit sequence is determined based on the quantity of coded modulation symbols corresponding to the first bit sequence, and a quantity of coded modulation symbols corresponding to the third bit sequence is determined based on the quantity of coded modulation symbols corresponding to the first bit sequence and the quantity of coded modulation symbols corresponding to the second bit sequence. Examples are as follows.

Example 5: If transmission of the UCI and transmission of the uplink data are simultaneously performed through the PUSCH, a repeated transmission TypeB is not used, and a TBoMS is not configured or the TBoMS is configured but a value of numberOfSlotsTBoMS is 1, for the quantities of coded modulation symbols corresponding to the first bit sequence and the second bit sequence, refer to the descriptions of Example 1. A quantity of coded modulation symbols corresponding to the fourth bit sequence satisfies: ${Q}_{CSI - 1}^{′} = min \left\{\begin{matrix}\left⌈\frac{\left({O}_{CSI - 1}+{L}_{CSI - 1}\right) ⋅ {β}_{offset}^{PUSCH} ⋅ {\sum }_{l = 0}^{{N}_{symb , all}^{PUSCH} - 1} {M}_{sc}^{UCI} \left(L\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ \\ - {Q}_{Pooling - UCI}^{′} - {Q}_{ACK / UTO - UCI}^{′}\end{matrix}\right\}$

*Q'*_{*CSI*-1} represents a quantity of coded modulation symbols corresponding to the CSI part 1; *O*_{*CSI*-1} represents a quantity of bits of a bit sequence corresponding to the CSI part 1; *L*_{*CSI*-1} represents a quantity of CRC bits of the bit sequence corresponding to the CSI part 1; *Q'*_{*Pooling*-*UCI*} represents a quantity of coded modulation symbols corresponding to the first information; and *Q'*_{*ACK*/*UTO*-*UCI*} represents a quantity of coded modulation symbols corresponding to the second information.

A quantity of coded modulation symbols corresponding to the fifth bit sequence satisfies: ${Q}_{CSI - 2}^{′} = min \left\{\begin{matrix}\left⌈\frac{\left({O}_{CSI - 2}+{L}_{CSI - 2}\right) ⋅ {β}_{offset}^{PUSCH} ⋅ {\sum }_{l = 0}^{{N}_{symb , all}^{PUSCH} - 1} {M}_{sc}^{UCI} \left(L\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ \\ - {Q}_{Pooling - UCI}^{′} - {Q}_{ACK / UTO - UCI}^{′} - {Q}_{CSI - 1}^{′}\end{matrix}\right\}$

*Q'*_{*CSI*-2} represents a quantity of coded modulation symbols corresponding to the CSI part 2; *O*_{*CSI*-2} represents a quantity of bits of a bit sequence corresponding to the CSI part 2; and *L*_{*CSI*-2} represents a quantity of CRC bits of the bit sequence corresponding to the CSI part 2.

Example 6: If transmission of the UCI and transmission of the uplink data are simultaneously performed through the PUSCH, a repeated transmission Type B is not used, and a TBoMS is configured but a value of numberOfSlotsTBoMS is *Nₛ*, where *Nₛ* is greater than 1, a factor $\frac{1}{{N}_{s}}$ is added to a denominator of the formula satisfied by each of quantities of coded modulation symbols corresponding to the first bit sequence, the second bit sequence, the fourth bit sequence, and the fifth bit sequence in Example 5.

Example 7: If transmission of the UCI and transmission of the uplink data are simultaneously performed through the PUSCH, and a repeated transmission Type B is used (by default, the repeated transmission Type B and the TBoMS are not simultaneously configured), for the quantities of coded modulation symbols corresponding to the first bit sequence and the second bit sequence, refer to the descriptions of Example 1. The quantity of coded modulation symbols corresponding to the fourth bit sequence satisfies: ${Q}_{CSI - 1}^{′} = min \left\{\begin{matrix}\left⌈\frac{\left({O}_{CSI - 1}+{L}_{CSI - 1}\right) ⋅ {β}_{offset}^{PUSCH} ⋅ {\sum }_{L = 0}^{{N}_{symb , nominal}^{PUSCH} - 1} {M}_{se , nominal}^{UCI} \left(l\right)}{{\sum }_{r = 0}^{{C}_{UL - SCH} - 1} {K}_{r}}\right⌉ , \left⌈\begin{matrix}α \\ ⋅ {\sum }_{l = 0}^{{N}_{symb , nominal}^{PUSCH} - 1} {M}_{sc , nominal}^{UCI} \left(l\right)\end{matrix}\right⌉ - {Q}_{Pooling - UCI}^{′} \\ - {Q}_{ACJ / UTO - UCI}^{′} , {\sum }_{l = 0}^{{N}_{symb , actual}^{PUSCH} - 1} {M}_{sc , actual}^{UCI} \left(l\right) - {Q}_{Pooling - UCI}^{′} - {Q}_{ACK / UTO - UCI}^{′}\end{matrix}\right\}$${N}_{symb , nominal}^{PUSCH}$ represents a total quantity of OFDM symbols in nominal repetition of the PUSCH; and ${M}_{sc , nominal}^{UCI} \left(l\right)$ represents a quantity of resource elements available for UCI transmission in an OFDM symbol *l*.

The quantity of coded modulation symbols corresponding to the fifth bit sequence satisfies: ${Q}_{CSI - 2}^{′} = min \left\{\begin{matrix}\left⌈\frac{\left({O}_{CSI - 2}+{L}_{CSI - 2}\right) ⋅ {β}_{offset}^{PUSCH} ⋅ {\sum }_{l = 0}^{{N}_{symb , nominal}^{PUSCH} - 1} {M}_{sc , nominal}^{UCI} \left(l\right)}{{\sum }_{r = 0}^{{C}_{UL - SCH} - 1} {K}_{r}}\right⌉ , \left⌈\begin{matrix}α \\ ⋅ {\sum }_{l = 0}^{{N}_{symb , nominal}^{PUSCH} - 1} {M}_{sc , nominal}^{UCI} \left(l\right)\end{matrix}\right⌉ - {Q}_{Poolling - UCI}^{′} - {Q}_{\frac{ACK}{UTO} - UCI}^{′} \\ - {Q}_{CSI - 1}^{′} , {\sum }_{l = 0}^{{N}_{symb , actual}^{PUSCH} - 1} {M}_{sc , actual}^{UCI} \left(l\right) - {Q}_{Pooling - UCI}^{′} - {Q}_{ACK / UTO - UCI}^{′} - {Q}_{CSI - 1}^{′}\end{matrix}\right\}$

Example 8: If transmission of the UCI and transmission of the uplink data are simultaneously performed through the PUSCH, and there is no UL-SCH data, the quantity of coded modulation symbols corresponding to the fourth bit sequence satisfies: ${Q}_{CSI - 1}^{′} = min \left\{\left⌈\frac{\left({O}_{CSI 1}+{L}_{CSI - 1}\right) ⋅ {β}_{offset}^{PUSCH}}{R ⋅ {Q}_{m}}\right⌉, \left⌈\begin{matrix}{\sum }_{l = 0}^{{N}_{symb , all}^{PUSCH} - 1} {M}_{sc}^{UCI} \left(l\right) - {Q}_{Pooling - UCI}^{′} \\ - {Q}_{ACK / UTO - UCI}^{′}\end{matrix}\right⌉\right\}$

R represents a code rate; and *Qₘ* represents a modulation order.

The quantity of coded modulation symbols corresponding to the fifth bit sequence satisfies: ${Q}_{CSI - 2}^{′} = {\sum }_{l = 0}^{{N}_{symb , all}^{PUSCH} - 1} {M}_{sc}^{UCI} \left(l\right) - {Q}_{Pooling - UCI}^{′} - {Q}_{ACK / UTO - UCI}^{′} - {Q}_{CSI - 1}^{′}$

After the coded modulation symbol corresponding to the bit sequence of the UCI is determined, the corresponding coded modulation symbol may be mapped to the first resource. Specifically, the first information, the second information, and the CSI may be mapped in sequence. Alternatively, it is understood as that the first bit sequence, the second bit sequence, and the third bit sequence are mapped in sequence, or the first bit sequence, the second bit sequence, the fourth bit sequence, and the fifth bit sequence are mapped in sequence. For a specific mapping rule, refer to the foregoing descriptions of the mapping of the first bit sequence and the second bit sequence. Details are not described again.

It should be noted as follows.
1. In the foregoing various cases (namely, Case 1 to Case 4), unless otherwise stated or there is a logic conflict, terms and/or descriptions in implementations of different cases are consistent and may be mutually referenced, and technical features in different embodiments may be combined based on an internal logical relationship thereof, to form a new case. For example, Case 1 is combined with Case 3. When the terminal sends the first information, the second information, and the CSI, the terminal may determine that the priority of the first information, the priority of the second information, and the priority of the CSI are the same.
2. In the foregoing various cases, if any piece of information is not sent, a corresponding bit sequence of the UCI is omitted. For example, in Case 1, if the terminal determines that the UTO-UCI does not need to be sent, the terminal omits a location of the bit sequence corresponding to the UTO-UCI in the bit sequence of the UCI.
3. In Case 1 to Case 4, when the second information includes the UTO-UCI, all the mentioned information is applicable to a licensed frequency band; and when the second information includes the CG-UCI, all the mentioned information is applicable to an unlicensed frequency band.
4. When the CRC adding module adds CRC to each of the bit sequence of the UCI, only one piece of CRC is added to bit sequences on which joint coding is performed, and each bit sequence on which independent coding is performed (that is, a bit sequence on which joint coding is not indicated to be performed) corresponds to one piece of CRC. For example, in the bit sequence of the UCI in Implementation 2, if joint channel coding is performed on the first bit sequence and the second bit sequence, the first bit sequence and the second bit sequence jointly correspond to one piece of CRC.
5. Further, after receiving the UCI from the terminal, the access network device performs inverse processing on the bit sequence of the UCI. For example, after the access network device receives the bit sequence of the UCI, a demodulation module demodulates the bit sequence of the UCI, and then a CRC removal module performs CRC removal processing on a bit sequence that is of the UCI and that has been processed by the demodulation module, and the like. It may be understood that the terminal codes the bit sequence of the UCI, for example, the first bit sequence and the second bit sequence; and correspondingly, after receiving the UCI, the access network device may decode the bit sequence of the UCI. Due to factors such as channel transmission and fading, although the first bit sequence and the second bit sequence that are obtained through decoding by the access network device are not completely the same as the first bit sequence and the second bit sequence that are generated by the terminal, for ease of description, the first bit sequence and the second bit sequence that are obtained through decoding by the access network device may be considered as the same as the first bit sequence and the second bit sequence that are generated by the terminal. The first bit sequence and the second bit sequence that are generated by the terminal, and the first bit sequence and the second bit sequence that are obtained through decoding by the access network device are not separately distinguished between, and are collectively referred to as the first bit sequence and the second bit sequence.

In conclusion, according to the UCI transmission method shown in FIG. 4, it can be ensured that the bit sequence corresponding to the first information is before the bit sequence corresponding to the second information, so that when the resources are limited, the terminal preferentially maps the bit sequence corresponding to the first information, to improve information transmission reliability, and facilitate service transmission.

It may be understood that, to implement functions in the foregoing embodiments, the terminal and the access network device include corresponding hardware structures and/or software modules for performing the functions. A person skilled in the art should be easily aware that, in this application, the units and method steps in the examples described with reference to embodiments disclosed in this application can be implemented by using hardware or a combination of hardware and computer software. Whether a function is performed by hardware or hardware driven by computer software depends on particular application scenarios and design constraint conditions of the technical solutions.

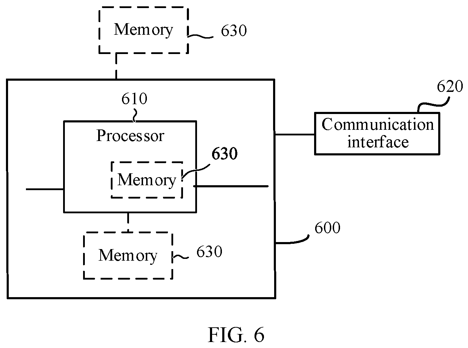

FIG. 5 and FIG. 6 are diagrams of structures of possible communication apparatuses according to embodiments of this application. These communication apparatuses may be configured to implement functions of the terminal or the access network device in the foregoing method embodiments, and therefore can also implement the beneficial effects of the foregoing method embodiments. The communication apparatus may be a terminal or an access network device. The communication apparatus includes modules or units that one-to-one correspond to the methods/operations/steps/actions performed by the terminal or the access network device in the foregoing method embodiments. The unit may be implemented by a hardware circuit, software, or a combination of the hardware circuit and the software. In embodiments of this application, the communication apparatus may be one of the terminals 120a to 120j shown in FIG. 1, may be the access network device 110a or 110b shown in FIG. 1, or may be a module (for example, a chip) used in the terminal or the access network device.

As shown in FIG. 5, a communication apparatus 500 may include a processing unit 501 and a transceiver unit 502. The communication apparatus 500 is configured to implement functions of the terminal or the access network device in the method embodiment shown in FIG. 4.

When the communication apparatus 500 is configured to implement the functions of the terminal in the method embodiment shown in FIG. 4,
the processing unit 501 is configured to obtain a first resource and a second resource;
the processing unit 501 is further configured to generate a bit sequence that is of UCI and that includes a first bit sequence and a second bit sequence, where the first bit sequence corresponds to first information indicating usage of the second resource by the terminal, the second bit sequence corresponds to second information, the second information includes one or more of: HARQ feedback information or information indicating an unused transmission occasion, a priority of the first information is the same as a priority of the second information, the first bit sequence is before the second bit sequence, and lengths of the first bit sequence and the second bit sequence each are greater than or equal to 1; and
the transceiver unit 502 is configured to: when uplink data is fully carried by the first resource, send the uplink data and the UCI by using the first resource; and when the uplink data is not fully carried by the first resource, send the uplink data by using the first resource and a third resource, and send the UCI by using the first resource, where the third resource is a part or all of the second resource.

In a possible implementation, the processing unit 501 is further configured to obtain first indication information, where the first indication information indicates that the priority of the first information is the same as the priority of the second information.

In a possible implementation, the processing unit 501 is further configured to perform joint channel coding on the first bit sequence and the second bit sequence in the bit sequence of the UCI to obtain a coded bit sequence of the UCI.

In a possible implementation, the processing unit 501 is further configured to: determine, based on a quantity of bits of the first bit sequence and a quantity of CRC bits of the first bit sequence, a quantity of coded modulation symbols corresponding to the first bit sequence; and determine, based on the quantity of coded modulation symbols corresponding to the first bit sequence, a quantity of coded modulation symbols corresponding to the second bit sequence.

In a possible implementation, the processing unit 501 is further configured to map, starting from a resource block (resource block, RB)with a smallest sequence number in the first resource, a coded modulation symbol corresponding to the first bit sequence.

In a possible implementation, the processing unit 501 is further configured to map, to a physical resource reserved in the first resource for the first information and/or the second information, the coded modulation symbol corresponding to the first bit sequence.

In a possible implementation, the processing unit 501 is further configured to map, starting from a 1^{st} OFDM symbol after a 1^{st} DMRS, or starting from a 1^{st} OFDM symbol that is not for DMRS transmission, the coded modulation symbol corresponding to the first bit sequence, where the mapping includes: consecutively mapping the first bit sequence to REs of an OFDM symbol or evenly mapping the first bit sequence to the REs of the OFDM symbol in a distributed manner.

In a possible implementation, the processing unit 501 is further configured to map, starting from a 1^{st} OFDM symbol after a 1^{st} DMRS, or starting from a 1^{st} OFDM symbol that is not for DMRS transmission, the coded modulation symbol corresponding to the first bit sequence, where the mapping includes: consecutively mapping the first bit sequence and the second bit sequence to REs of an OFDM symbol or evenly mapping the first bit sequence and the second bit sequence to the REs of the OFDM symbol in a distributed manner.

When the communication apparatus 500 is configured to implement the functions of the access network device in the method embodiment shown in FIG. 4,
the processing unit 501 is configured to obtain a first resource and a second resource;
the transceiver unit 502 is configured to receive UCI from a terminal on the first resource, where a bit sequence of the UCI includes a first bit sequence and a second bit sequence, the first bit sequence corresponds to first information indicating usage of the second resource by the terminal, the second bit sequence corresponds to second information, the second information includes one or more of: HARQ feedback information or information indicating an unused transmission occasion, a priority of the first information is the same as a priority of the second information, the first bit sequence is before the second bit sequence, and lengths of the first bit sequence and the second bit sequence each are greater than or equal to 1; and
the transceiver unit 502 is further configured to receive uplink data on the first resource based on the UCI, or receive the uplink data on the first resource and a third resource based on the UCI, where the third resource is a part or all of the second resource.

In a possible implementation, the transceiver unit 502 is further configured to send first indication information to the terminal, where the first indication information indicates that the priority of the first information is the same as the priority of the second information.

In a possible implementation, a coded modulation symbol corresponding to the first bit sequence is mapped starting from an RB with a smallest sequence number in the first resource.

In a possible implementation, the coded modulation symbol corresponding to the first bit sequence is mapped to a physical resource reserved in the first resource for the first information and/or the second information.

For more detailed descriptions of the processing unit 501 and the transceiver unit 502, refer to the related descriptions in the method embodiment shown in FIG. 4.

As shown in FIG. 6, a communication apparatus 600 is provided, and is configured to implement functions of the foregoing terminal or access network device. The apparatus may be a communication device or an apparatus used in the communication device, and the communication device may be a terminal or an access network device. The apparatus used in the communication device may be a chip system or a chip in the communication device. The chip system may include a chip, or may include a chip and another discrete device.

The communication apparatus 600 includes at least one processor 610, configured to implement a processing function of the device (for example, the access network device or the terminal) in the methods provided in embodiments of this application. The communication apparatus 600 may further include a communication interface 620, configured to implement receiving and sending operations of the device (for example, the access network device or the terminal) in the methods provided in embodiments of this application. In embodiments of this application, the communication interface may be a transceiver, a circuit, a bus, a module, or another type of communication interface, and is configured to communicate with another device through a transmission medium. For example, the communication interface 620 is used by an apparatus in the communication apparatus 600 to communicate with another device. The processor 610 receives and sends data through the communication interface 620, and is configured to implement the methods in the foregoing method embodiments.

The communication apparatus 600 may further include at least one memory 630, configured to store program instructions and/or data. The memory 630 is coupled to the processor 610. The coupling in this embodiment of this application may be an indirect coupling or a communication connection between apparatuses, units, or modules in an electrical form, a mechanical form, or another form, and is used for information exchange between the apparatuses, the units, or the modules. The processor 610 may cooperate with the memory 630. The processor 610 may execute the program instructions stored in the memory 630. At least one of the at least one memory may be included in the processor.

In this embodiment of this application, a specific connection medium between the communication interface 620, the processor 610, and the memory 630 is not limited. In this embodiment of this application, in FIG. 6, the memory 630, the processor 610, and the communication interface 620 are connected through a bus. The bus is represented by a thick line in FIG. 6. A connection manner between other components is merely an example for description, and is not limited thereto. The bus may be classified into an address bus, a data bus, a control bus, and the like. For ease of representation, only one bold line is used for representation in FIG. 6, but this does not mean that there is only one bus or only one type of bus.

When the communication apparatus 600 is specifically the apparatus used in the device (for example, the access network device or the terminal), for example, when the communication apparatus 600 is specifically the chip or the chip system, the communication interface 620 may output or receive a baseband signal. When the communication apparatus 600 is specifically the device (for example, the access network device or the terminal), the communication interface 620 may output or receive a radio frequency signal. In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any regular processor, or the like. The steps of the method disclosed with reference to embodiments of this application may be directly performed and completed by a hardware processor, or may be performed and completed by using a combination of hardware in the processor and a software module.

It should be noted that the communication interface 620 may be configured to perform a function of the foregoing transceiver unit 502, and the processor 610 may be configured to perform a function of the foregoing processing unit 501. Details are not described herein again.

When the communication apparatus is a chip used in a terminal, the chip in the terminal implements a function of the terminal in the foregoing method embodiment. The chip in the terminal receives information from another network element; or the chip in the terminal sends information to another network element.

When the communication apparatus is a chip used in the access network device, the chip in the access network device implements a function of the access network device in the foregoing method embodiment. The chip in the access network device receives information from another network element; or the chip in the access network device sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

The method steps in embodiments of this application may be implemented in a hardware manner, or may be implemented by the processor executing software instructions. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. In an example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal. Certainly, the processor and the storage medium may alternatively exist in a terminal or an access network device as discrete components.

All or a part of the foregoing embodiments may be implemented by software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk drive, or a magnetic tape; may be an optical medium, for example, a DVD; or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions, and when the computer-executable instructions are executed, the method performed by the terminal or the access network device in the foregoing method embodiment is implemented.

An embodiment of this application further provides a computer program product. The computer program product includes a computer program, and when the computer program is executed, the method performed by the terminal or the access network device in the foregoing method embodiment is implemented.

An embodiment of this application further provides a communication system. The communication system includes a terminal or an access network device. The terminal is configured to perform the method performed by the terminal in the foregoing method embodiment. The access network device is configured to perform the method performed by the access network device in the foregoing method embodiment.

It should be noted that, for brief description, the foregoing method embodiments are represented as a series of actions. However, a person skilled in the art should appreciate that this application is not limited to the described order of the actions, because according to this application, some steps may be performed in other orders or simultaneously. In addition, it should be further appreciated by a person skilled in the art that embodiments described in the specification all belong to example embodiments, and the involved actions and modules are not necessarily required by this application.

The descriptions of embodiments provided in this application may refer to each other, and the descriptions of embodiments have different focuses. For a part not described in detail in an embodiment, refer to the related descriptions in another embodiment. For ease of description and brevity, for example, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, a person of ordinary skill in the art should understand that the person of ordinary skill in the art may still make modifications to the technical solutions recorded in the foregoing embodiments or make equivalent replacements to a part or all technical features thereof. However, these modifications and replacements do not make the essence of the corresponding technical solutions depart from the scope of the technical solutions of embodiments of this application.

## Claims

1. A communication method, wherein the method is applied to a terminal and comprises:
obtaining a first resource and a second resource;
generating a bit sequence of uplink control information UCI, wherein the bit sequence of the UCI comprises a first bit sequence and a second bit sequence, the first bit sequence corresponds to first information, the first information indicates usage of the second resource by the terminal, the second bit sequence corresponds to second information, the second information comprises one or more of: hybrid automatic repeat request HARQ feedback information or information indicating an unused transmission occasion, a priority of the first information is the same as a priority of the second information, the first bit sequence is before the second bit sequence, a length of the first bit sequence is greater than or equal to 1, and a length of the second bit sequence is greater than or equal to 1;
when uplink data is fully carried by the first resource, sending the uplink data and the UCI by using the first resource; and
when the uplink data is not fully carried by the first resource, sending the uplink data by using the first resource and a third resource, and sending the UCI by using the first resource, wherein the third resource is a part or all of the second resource.

2. The method according to claim 1, wherein the method further comprises:
obtaining first indication information, wherein the first indication information indicates that the priority of the first information is the same as the priority of the second information.

3. The method according to claim 1 or 2, wherein the method further comprises:
performing joint channel coding on the first bit sequence and the second bit sequence in the bit sequence of the UCI to obtain a coded bit sequence of the UCI.

4. The method according to any one of claims 1 to 3, wherein the method further comprises:
determining, based on a quantity of bits of the first bit sequence and a quantity of cyclic redundancy check CRC bits of the first bit sequence, a quantity of coded modulation symbols corresponding to the first bit sequence; and
determining, based on the quantity of coded modulation symbols corresponding to the first bit sequence, a quantity of coded modulation symbols corresponding to the second bit sequence.

5. The method according to any one of claims 1 to 4, wherein the method further comprises:
mapping, starting from a resource block RB with a smallest sequence number in the first resource, a coded modulation symbol corresponding to the first bit sequence.

6. The method according to any one of claims 1 to 5, wherein the method further comprises:
mapping, to a physical resource reserved in the first resource for the first information and/or the second information, the coded modulation symbol corresponding to the first bit sequence.

7. A communication method, comprising:
obtaining a first resource and a second resource;
receiving uplink control information UCI from a terminal on the first resource, wherein a bit sequence of the UCI comprises a first bit sequence and a second bit sequence, the first bit sequence corresponds to first information, the first information indicates usage of the second resource by the terminal, the second bit sequence corresponds to second information, the second information comprises one or more of: hybrid automatic repeat request HARQ feedback information or information indicating an unused transmission occasion, a priority of the first information is the same as a priority of the second information, the first bit sequence is before the second bit sequence, a length of the first bit sequence is greater than or equal to 1, and a length of the second bit sequence is greater than or equal to 1; and
receiving uplink data on the first resource based on the UCI, or receiving the uplink data on the first resource and a third resource based on the UCI, wherein the third resource is a part or all of the second resource.

8. The method according to claim 7, wherein the method further comprises:
sending first indication information to the terminal, wherein the first indication information indicates that the priority of the first information is the same as the priority of the second information.

9. The method according to claim 7 or 8, wherein a coded modulation symbol corresponding to the first bit sequence is mapped starting from a resource block RB with a smallest sequence number in the first resource.

10. The method according to any one of claims 7 to 9, wherein the coded modulation symbol corresponding to the first bit sequence is mapped to a physical resource reserved in the first resource for the first information and/or the second information.

11. A communication apparatus, comprising:
a processing unit, configured to obtain a first resource and a second resource, wherein
the processing unit is further configured to generate a bit sequence of uplink control information UCI, wherein the bit sequence of the UCI comprises a first bit sequence and a second bit sequence, the first bit sequence corresponds to first information, the first information indicates usage of the second resource by the terminal, the second bit sequence corresponds to second information, the second information comprises one or more of: hybrid automatic repeat request HARQ feedback information or information indicating an unused transmission occasion, a priority of the first information is the same as a priority of the second information, the first bit sequence is before the second bit sequence, a length of the first bit sequence is greater than or equal to 1, and a length of the second bit sequence is greater than or equal to 1; and
a transceiver unit, configured to: when uplink data is fully carried by the first resource, send the uplink data and the UCI by using the first resource, wherein
the transceiver unit is further configured to: when the uplink data is not fully carried by the first resource, send the uplink data by using the first resource and a third resource, and send the UCI by using the first resource, wherein the third resource is a part or all of the second resource.

12. The apparatus according to claim 11, wherein the processing unit is further configured to obtain first indication information, wherein the first indication information indicates that the priority of the first information is the same as the priority of the second information.

13. The apparatus according to claim 11 or 12, wherein the processing unit is further configured to perform joint channel coding on the first bit sequence and the second bit sequence in the bit sequence of the UCI to obtain a coded bit sequence of the UCI.

14. The apparatus according to any one of claims 11 to 13, wherein the processing unit is further configured to:
determine, based on a quantity of bits of the first bit sequence and a quantity of cyclic redundancy check CRC bits of the first bit sequence, a quantity of coded modulation symbols corresponding to the first bit sequence; and
determine, based on the quantity of coded modulation symbols corresponding to the first bit sequence, a quantity of coded modulation symbols corresponding to the second bit sequence.

15. The apparatus according to any one of claims 11 to 14, wherein the processing unit is further configured to map, starting from a resource block RB with a smallest sequence number in the first resource, a coded modulation symbol corresponding to the first bit sequence.

16. The apparatus according to any one of claims 11 to 15, wherein the processing unit is further configured to map, to a physical resource reserved in the first resource for the first information and/or the second information, the coded modulation symbol corresponding to the first bit sequence.

17. A communication apparatus, comprising:
a processing unit, configured to obtain a first resource and a second resource; and
a transceiver unit, configured to receive uplink control information UCI from a terminal on the first resource, wherein a bit sequence of the UCI comprises a first bit sequence and a second bit sequence, the first bit sequence corresponds to first information, the first information indicates usage of the second resource by the terminal, the second bit sequence corresponds to second information, the second information comprises one or more of: hybrid automatic repeat request HARQ feedback information or information indicating an unused transmission occasion, a priority of the first information is the same as a priority of the second information, the first bit sequence is before the second bit sequence, a length of the first bit sequence is greater than or equal to 1, and a length of the second bit sequence is greater than or equal to 1, wherein
the transceiver unit is further configured to: receive uplink data on the first resource based on the UCI, or receive the uplink data on the first resource and a third resource based on the UCI, wherein the third resource is a part or all of the second resource.

18. The apparatus according to claim 17, wherein the transceiver unit is further configured to send first indication information to the terminal, wherein the first indication information indicates that the priority of the first information is the same as the priority of the second information.

19. The apparatus according to claim 17 or 18, wherein a coded modulation symbol corresponding to the first bit sequence is mapped starting from a resource block RB with a smallest sequence number in the first resource.

20. The apparatus according to any one of claims 17 to 19, wherein the coded modulation symbol corresponding to the first bit sequence is mapped to a physical resource reserved in the first resource for the first information and/or the second information.

21. A communication apparatus, comprising a processor, wherein the processor is coupled to a memory, the memory is configured to store a program or instructions, and when the program or the instructions are executed by the processor, the apparatus is caused to perform the method according to any one of claims 1 to 6.

22. A communication apparatus, comprising a processor, wherein the processor is coupled to a memory, the memory is configured to store a program or instructions, and when the program or the instructions are executed by the processor, the apparatus is caused to perform the method according to any one of claims 7 to 10.

23. A computer-readable storage medium, wherein the storage medium stores a computer program or instructions, and when the computer program or the instructions are executed, the method according to any one of claims 1 to 6 or the method according to any one of claims 7 to 10 is implemented.

24. A computer program product, comprising computer program code, wherein when the computer program code is run, the method according to any one of claims 1 to 6 or the method according to any one of claims 7 to 10 is implemented.

25. A communication system, comprising a communication apparatus configured to perform the method according to any one of claims 1 to 6 and a communication apparatus configured to perform the method according to any one of claims 7 to 10.
